# EUROPEAN PATENT APPLICATION

(11) **EP 3 355 204 A1**
(43) Date of publication of application: **01.08.2018**
(21) Application number: 16848031.7
(22) Date of filing: 13.09.2016
(51) Int. Cl.: G06F 17/30

(54) **INFORMATION SEARCH METHOD AND DEVICE**

(30) Priority: 22.09.2015 CN 201510609758
(71) Applicant: Alibaba Group Holding Limited, Grand Cayman (KY)
(72) Inventor: ZENG, Anxiang, Hangzhou Zhejiang 311121 (CN); OU, Kairi, Hangzhou Zhejiang 311121 (CN)
(74) Representative: Barker Brettell LLP
(86) International application number: PCT/CN2016/098817
(87) International publication number: WO 2017/050149

(57) **Abstract**

The present disclosure provides an information search method and apparatus. The information search method includes: receiving a search term input by a user; acquiring a search result based on the search term; acquiring description information corresponding to the search result; extracting one or more word segments from the description information; combining the one or more word segments to generate a title of the search result, where at least one word segment carries a hyperlink label; and returning the title after the combination of the word segments carrying the hyperlink labels to a user terminal for display. The method may facilitate a user to initiate a search, and may provide a relatively large number of search terms for the user to select from.

## Description

### TECHNICAL FIELD

The present disclosure relates to the field of Internet technologies, and, more particularly, to information search methods and apparatuses.

### BACKGROUND

A user may input a search term by using an input method editor (IME) to trigger a search for information. However, when the user conducts a search in an application on a mobile terminal, it is inconvenient for the user to input a search term by using an IME, because the mobile terminal is relatively small in size. To make it more convenient for the user to input a search term, candidate search terms may be displayed for the user in a drop-down area of an input box or a navigation area of a page.

However, generally only a limited number of candidate search terms may be displayed using such method.

### SUMMARY

The present disclosure is intended to at least solve one of the technical problems in the related art.

To this end, one objective of the present disclosure is to provide an information search method. The method may facilitate a user to initiate a search, and may provide a relatively large number of search terms for the user to select from.

Another objective of the present disclosure is to provide an information search apparatus.

To achieve the foregoing objective, in a first aspect, example embodiments of the present disclosure provide an information search method, including: receiving a search term input by a user; acquiring a search result based on the search term; acquiring description information corresponding to the search result; extracting one or more word segments from the description information; combining the one or more word segments to generate a title of the search result, where at least one word segment carries a hyperlink label; and returning the title carrying the hyperlink label after the combination of the word segments to a user terminal for display.

According to the information search method provided in the first aspect of the example embodiments of the present disclosure, one or more word segments are extracted from description information about a search result, and at least one word segment carries a hyperlink label, so that a new search may be initiated based on the search result, thus facilitating a user to initiate a search. Moreover, because combined word segments are used as a title, an infinite number of word segments may be presented theoretically. Therefore, the number of new search terms may be increased to better meet the user's needs.

To achieve the foregoing objective, in a second aspect, the example embodiments of the present disclosure provide an information search apparatus, including: a receiving module configured to receive a search term input by a user; a first acquisition module configured to acquire a search result based on the search term; a second acquisition module configured to acquire description information corresponding to the search result; an extraction module configured to extract one or more word segments from the description information; a generation module configured to combine the one or more word segments to generate a title of the search result, where at least one word segment carries a hyperlink label; and a sending module configured to return the title after the combination of the word segments carrying the hyperlink labels to a user terminal for display.

According to the information search apparatus provided in the second aspect of the example embodiments of the present disclosure, one or more word segments are extracted from description information about a search result, and at least one word segment carries a hyperlink label, so that a new search may be initiated based on the search result, thus facilitating a user to initiate a search. Moreover, because combined word segments are used as a title, an infinite number of word segments may be presented theoretically. Therefore, the number of new search terms may be increased, to better meet the user's needs.

Some additional aspects and advantages of the present disclosure will be given in the following description, and some will become apparent in the following description or may be understood through the practice of the present disclosure.

### BRIEF DESCRIPTION OF THE DRAWINGS

The foregoing and/or additional aspects and advantages of the present disclosure will become apparent and readily comprehensible based on the following descriptions about the example embodiments with reference to the accompanying drawings, wherein:
FIG. 1a is a schematic flowchart of an information search method according to an example embodiment of the present disclosure;
FIG. 1b is a schematic flowchart of an information search method according to an example embodiment of the present disclosure;
FIG. 2 is a schematic flowchart of an information search method according to another example embodiment of the present disclosure;
FIG. 3 is a diagram of a presented search result according to an example embodiment of the present disclosure;
FIG. 4 is a schematic structural diagram of an information search apparatus according to another example embodiment of the present disclosure; and
FIG. 5 is a schematic structural diagram of an information search apparatus according to another example embodiment of the present disclosure.

### DETAILED DESCRIPTION

The example embodiments of the present disclosure are described in detail in the following. Examples of the example embodiments are illustrated in the accompanying drawings, wherein identical or similar symbols indicate identical or similar elements or elements having identical or similar functions throughout the specification. The following example embodiments described with reference to the accompanying drawings are exemplary, and are only intended to explain the present disclosure, but are not to be understood as limitations to the present disclosure. On the contrary, the example embodiments of the present disclosure include all changes, modifications and equivalents falling within the spirit and broad scope of the appended claims.

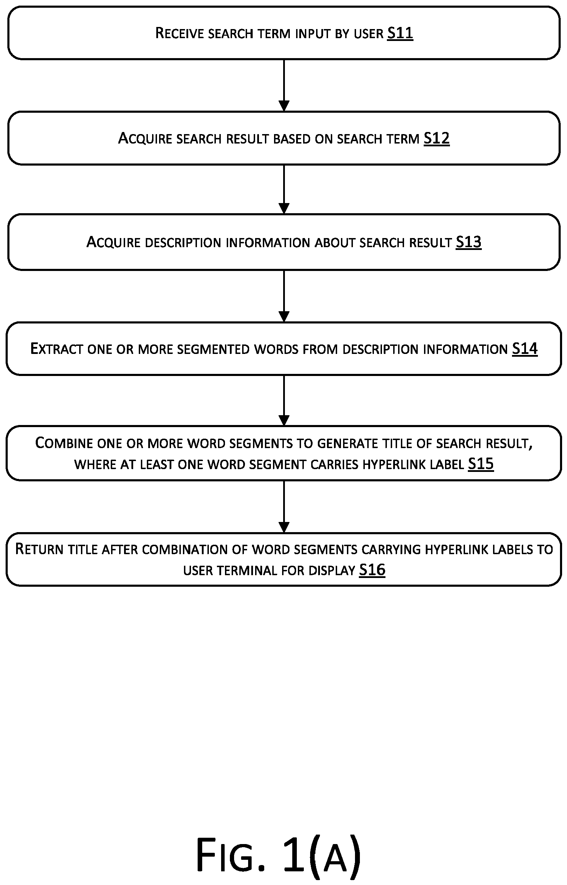

FIG. 1a is a schematic flowchart of an information search method according to an example embodiment of the present disclosure. The method includes the following steps:
S11: A search term input by a user is received.

For example, the user may input a search term at a client terminal. The client terminal may send the search term to a server terminal after receiving the search term input by the user.

In addition to inputting the search term to the client terminal by using an input method, the user may also click or tap a selected search term in an area such as a navigation area or drop-down box to input the search term, or input the search term by voice. Certainly, it should be understood that if the search term is input by voice, after receiving voice data, the server terminal may first perform voice recognition to convert the voice data to text and then search a database for a corresponding search result.

S12: A search result is acquired based on the search term.

After receiving the search term, the server terminal may search a database for a search result corresponding to the search term.

By taking a commodity search as an example, assuming that the search term is "down jacket", the server terminal may acquire information about a commodity corresponding to "down jacket". For example, the information about the commodity includes a title of the commodity, a picture of the commodity, details of the commodity, and so on.

S13: Description information corresponding to the search result is acquired.

The description information may be a title of the search result, detailed description and so on.

S14: One or more word segments are extracted from the description information.

For example, the server terminal may perform word segmentation and tagging on the title of the search result, and extract one or more word segments from the title, or extract word segments from the remaining description information other than the title.

For example, the title of the commodity includes an original title or a short title obtained by reducing the length of the original title. For example, when a user searches for "down jacket", an original title of a search result (commodity) obtained is "Nanjiren new thickened wool collar down jacket for middle-aged men", and then keywords may be extracted from the original title.

Alternatively, the original title may be first converted into a short title which retains key information in the original title, to reduce the length of the original title. For example, a short title candidate set that includes a plurality of short titles may be pre-configured. Then a short title belonging to the short title candidate set may be extracted from the original title. For example, the short title candidate set includes "thickened wool collar down jacket", "lively succulent", and so on. As the original title includes "thickened wool collar down jacket" which belongs to the short title candidate set, the short title extracted is "thickened wool collar down jacket". After the short title is acquired, keywords may also be extracted from the short title.

Data other than the title of the commodity includes, for example, feature data of the commodity, or feature data of a store to which the commodity belongs. For example, the feature data is specifically selling points. The selling points refer to statistical information that may attract users and describe non-physical attributes of a commodity or a store. The feature data of the commodity includes, for example, "ultra-high praise rate", "popular among college students", "good news for fat girls", and so on. The feature data of the store includes, for example, "gold seller", "six-year-old store", and so on. Then, keywords may be extracted from the data other than the title.

S15: The one or more word segments are combined to generate a title of the search result, where at least one word segment carries a hyperlink label.

For example, the search result includes an original title. If the original title is "Nanjiren new thickened wool collar down jacket for middle-aged men", word segments "thickened", "wool collar" and "down jacket" may be extracted from the original title. Assuming that the word segment that carries a hyperlink label is "thickened", the obtained title of the search result is "thickened woolen jacket", in which "thickened" is a word segment added with a hyperlink. A hyperlink is an HTML element used frequently in a website. A hyperlink may be added to a keyword by setting an HTML element, thus completing redirection between pages.

S16: The title after the combination of the word segments carrying the hyperlink labels is returned to a user terminal for display.

For example, a server terminal sends the title after the combination to a client terminal, and the client terminal presents a processed title such as "thickened woolen jacket" at a commodity title presentation position on a search result page.

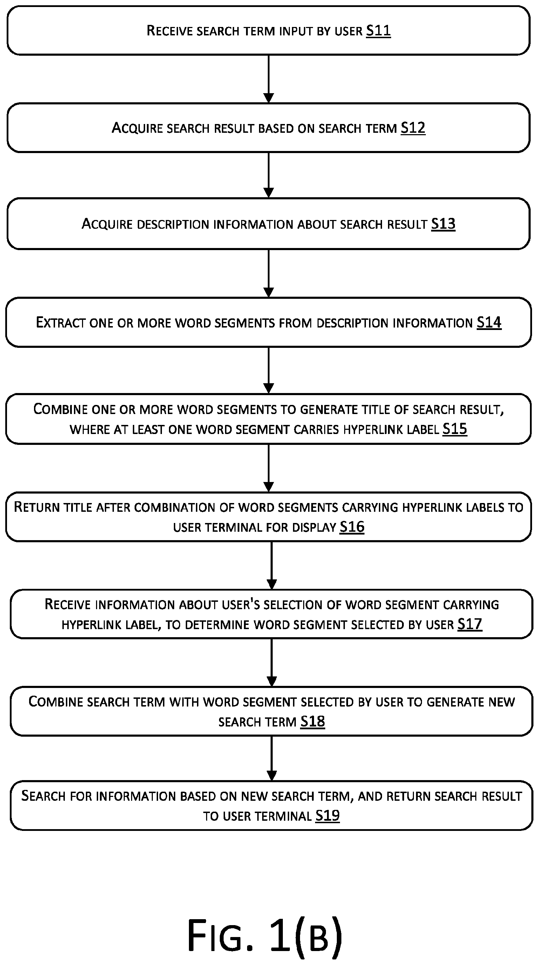

In some example embodiments, referring to FIG. 1b, the method may further include the following steps:
S17: Information about the user's selection of a word segment carrying a hyperlink label is received, to determine the word segment selected by the user.
   For example, assuming that the user clicks or taps "thickened" after "thickened woolen jacket" is presented to the user, it is determined that the selected word segment is "thickened".
S18: The search term is combined with the word segment selected by the user to generate a new search term.
   For example, the new search term is "thickened + down jacket".
S19: Information is searched for based on the new search term, and a search result is returned to the user terminal.

For example, a search result corresponding to "thickened + down jacket" is searched for, and is returned to the user terminal for presentation.

In this example embodiment, one or more word segments are extracted from description information about a search result, and at least one word segment carries a hyperlink label, so that a new search may be initiated based on the search result, thus facilitating a user to initiate a search. Moreover, because a combined word segment is used as a title, an infinite number of word segments may be presented theoretically. Therefore, the number of new search terms may be increased, to better meet the user's needs.

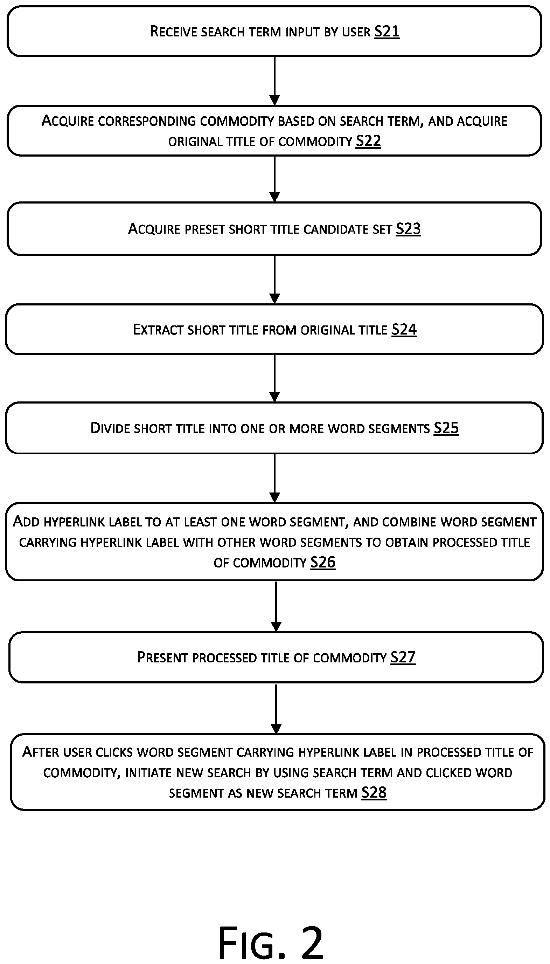

FIG. 2 is a schematic flowchart of an information search method according to another example embodiment of the present disclosure. This example embodiment takes a commodity search as an example. The method includes the following steps:
S21: A search term input by a user is received.

For example, the user may input a search term at a client terminal. The client terminal may send the search term to a server terminal after receiving the search term input by the user.

In addition to inputting the search term to the client terminal by using an input method, the user may also click or tap a selected search term in an area such as a navigation area or drop-down box to input the search term, or input the search term by voice. Certainly, it may be understood that if the search term is input by voice, after receiving voice data, the server terminal may first perform voice recognition to convert the voice data to text and then search a database for a corresponding search result.

S22: A corresponding commodity is acquired based on the search term, and an original title of the commodity is acquired.

After receiving the search term, the server terminal may search a database for a search result corresponding to the search term.

By taking a commodity search as an example, assuming that the search term is "down jacket", the server terminal may acquire information about a commodity corresponding to "down jacket". For example, the information about the commodity includes an original title of the commodity, a picture of the commodity, details of the commodity, and so on.

For example, the original title is "Nanjiren new thickened wool collar down jacket for middle-aged men".

S23: A preset short title candidate set is acquired.

Here, the short title candidate set may be preset on the server terminal. The short title candidate set includes a plurality of short titles. For example, the short title candidate set includes "thickened wool collar down jacket", "lively succulent", and so on.

S24: A short title is extracted from the original title.

A short title belonging to the short title candidate set is extracted from the original title. For example, as the original title includes "thickened wool collar down jacket" which belongs to the short title candidate set, the extracted short title is "thickened wool collar down jacket".

In addition, before the short title is extracted from the original title, word segmentation, part-of-speech tagging, and so on may further be performed on the original title, to facilitate extraction of the short title.

S25: The short title is divided into one or more word segments.

In this example embodiment, assuming that the acquired word segment is extracted from the short title, for example, the short title is divided into "thickened" and "down jacket".

It should be understood that a word segment may also be extracted from data other than the title of the commodity. The data other than the title of the commodity includes, for example, feature data of the commodity, or feature data of a store to which the commodity belongs. For example, the feature data is specifically selling points. The selling points refer to statistical information that may attract users and describe non-physical attributes of a commodity or a store. The feature data of the commodity includes, for example, "ultra-high praise rate", "popular among college students", "good news for fat girls", and so on. The feature data of the store includes, for example, "gold seller", "six-year-old store", and so on. Then, keywords may be extracted from the data other than the title.

S26: A hyperlink label is added to at least one word segment, and the word segment carrying a hyperlink label is combined with other word segments to obtain a processed title of the commodity.

For example, the processed title is "thickened woolen jacket", where "thickened" is a word segment added with a hyperlink. A hyperlink is an HTML element used frequently in a website. A hyperlink may be added to a keyword by setting an HTML element, thus completing redirection between pages.

S27: The processed title of the commodity is presented.

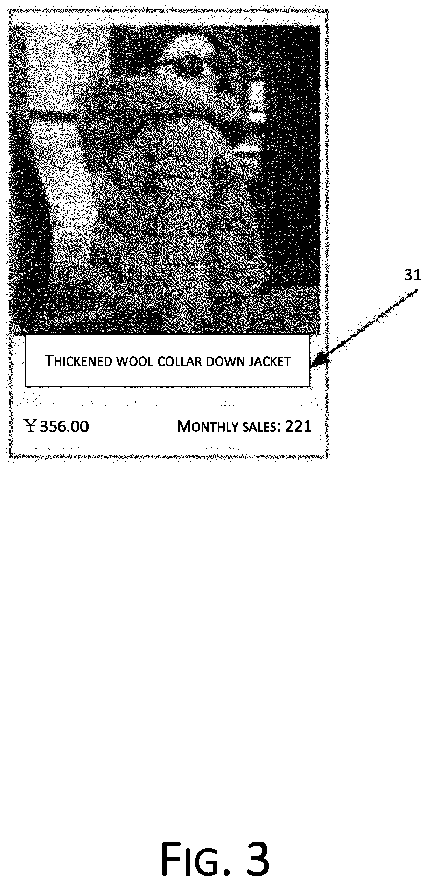

For example, after acquiring a processed search result, the server terminal may send the processed search result to the client terminal, and the client terminal presents the processed title at a commodity title presentation position on a search result page. For example, referring to FIG. 3, a processed commodity title 31 is presented, and the processed title is "thickened woolen jacket" .

S28: After the user clicks the word segment carrying a hyperlink label in the processed title of the commodity, a new search is initiated by using the search term and the clicked word segment as a new search term.

For example, after the user clicks or taps "thickened", a new search that uses "thickened down jacket" as a new search term may be initiated, and a search result corresponding to "thickened down jacket" is presented.

In this example embodiment, by presenting the processed title of the commodity that includes a word segment carrying a hyperlink label, a new search based on the search result may be initiated. As keywords are presented on the title of the commodity, an infinite number of word segments may be presented theoretically. As such, the number of new search terms may be increased, to better meet user's needs. In this example embodiment, keywords are added to the title of the commodity, so that the user may view the keywords conveniently. The user may initiate a new search by clicking or tapping a word segment that carries a hyperlink label, thus accelerating the search. By extracting word segments from the feature data of the commodity or the feature data of the store, the user may be guided to initiate a search based on a search term that would not have been used originally.

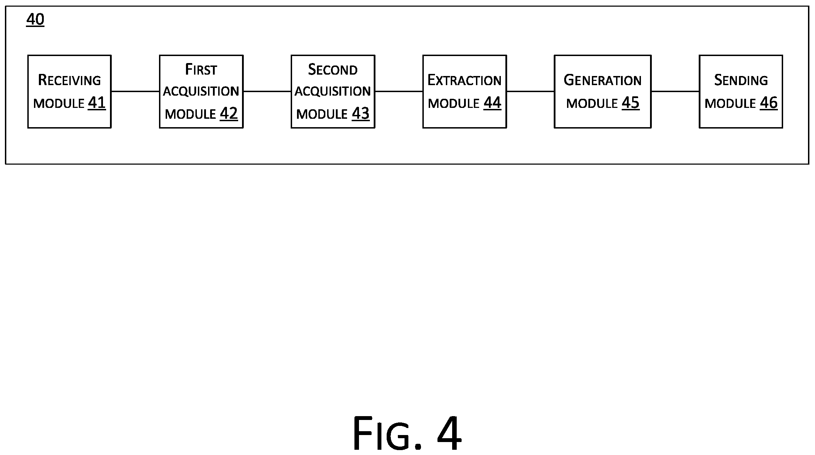

FIG. 4 is a schematic structural diagram of an information search apparatus according to another example embodiment of the present disclosure. The system 40 includes a receiving module 41, a first acquisition module 42, a second acquisition module 43, an extraction module 44, a generation module 45, and a sending module 46.

The receiving module 41 is configured to receive a search term input by a user.

For example, the user may input a search term at a client terminal. The client terminal may send the search term to a server terminal after receiving the search term input by the user.

In addition to inputting the search term to the client terminal by using an input method, the user may also click or tap a selected search term in an area such as a navigation area or drop-down box to input the search term, or input the search term by voice. Certainly, it should be understood that if the search term is input by voice, after receiving voice data, the server terminal may first perform voice recognition to convert the voice data to text and then search a database for a corresponding search result.

The first acquisition module 42 is configured to acquire a search result based on the search term.

After receiving the search term, the server terminal may search a database for a search result corresponding to the search term.

By taking a commodity search as an example, assuming that the search term is "down jacket", the server terminal may acquire information about a commodity corresponding to "down jacket". For example, the information about the commodity includes a title of the commodity, a picture of the commodity, details of the commodity, and so on.

The second acquisition module 43 is configured to acquire description information corresponding to the search result

Optionally, in a commodity search, the search result may include information about a commodity corresponding to the search term, and the description information corresponding to the search result may include one or more of the following:
a title of the commodity;
feature data of the commodity; and
feature data of a store to which the commodity belongs.

The extraction module 44 is configured to extract one or more word segments from the description information.

For example, the server terminal may perform word segmentation and tagging on the title of the search result, and extract one or more word segments from the search result, or extract word segments from other description information except the title.

For example, the title of the commodity includes an original title or a short title obtained by reducing the length of the original title. For example, when a user searches for "down jacket", an original title of a search result (commodity) obtained is "Nanjiren new thickened wool collar down jacket for middle-aged men", and then keywords may be extracted from the original title.

Alternatively, the original title may be first converted into a short title which retains key information in the original title, to reduce the length of the original title. For example, a short title candidate set that includes a plurality of short titles may be pre-configured. Then a short title belonging to the short title candidate set may be extracted from the original title. For example, the short title candidate set includes "thickened wool collar down jacket", "lively succulent", and so on. As the original title includes "thickened wool collar down jacket" which belongs to the short title candidate set, the short title extracted is "thickened wool collar down jacket". After the short title is acquired, keywords may also be extracted from the short title.

Data other than the title of the commodity includes, for example, feature data of the commodity, or feature data of a store to which the commodity belongs. For example, the feature data is specifically selling points. The selling points refer to statistical information that may attract users and describe non-physical attributes of a commodity or a store. The feature data of the commodity includes, for example, "ultra-high praise rate", "popular among college students", "good news for fat girls", and so on. The feature data of the store includes, for example, "gold seller", "six-year-old store", and so on. Then, keywords may be extracted from the data other than the title.

Optionally, the title of the commodity includes: an original title of the commodity, and the extraction module 44 may be specifically configured to:
reduce the length of the original title of the commodity to convert the original title to a short title; and
divide the short title into one or more word segments.

Optionally, the extraction module 44 is configured to reduce the length of the original title of the commodity to convert the original title to a short title, which may include:
acquiring a preset short title candidate set, wherein the short title candidate set includes a plurality of short titles; and
extracting a short title belonging to the short title candidate set from the original title.

The generation module 45 is configured to combine the one or more word segments to generate a title of the search result, where at least one word segment carries a hyperlink label.

For example, the search result includes an original title. If the original title is "Nanjiren new thickened wool collar down jacket for middle-aged men", word segments "thickened", "wool collar" and "down jacket" may be extracted from the original title. Assuming that the word segment that carries a hyperlink label is "thickened", it may be obtained that the title of the search result is "thickened woolen jacket", where "thickened" is a word segment added with a hyperlink. A hyperlink is an HTML element used frequently in a website. A hyperlink may be added to a keyword by setting an HTML element, thus completing redirection between pages.

The sending module 46 is configured to return the title after the combination of the word segments carrying the hyperlink labels to a user terminal for display.

For example, the server terminal sends the title after the combination to the client terminal. The client terminal presents a processed title such as "thickened woolen jacket" at a commodity title presentation position on a search result page.

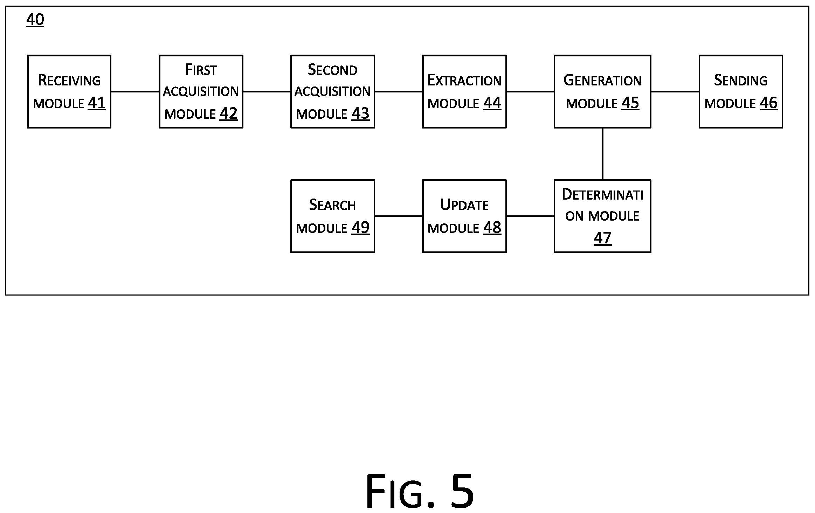

In some example embodiments, referring to FIG. 5, the apparatus 40 further includes a determination module 47, an update module 48, and a search module 49.

The determination module 47 is configured to receive information about the user's selection of a word segment carrying a hyperlink label, to determine the word segment selected by the user.

For example, assuming that the user clicks or taps "thickened" after "thickened woolen jacket" is presented to the user, it is determined that the selected word segment is "thickened".

The update module 48 is configured to combine the search term with the word segment selected by the user to generate a new search term.

For example, the new search term is "thickened + down jacket".

The search module 49 is configured to search for information based on the new search term, and return a search result to the user terminal.

For example, a search result corresponding to "thickened + down jacket" is searched for, and is returned to the user terminal for presentation.

In this example embodiment, one or more word segments are extracted from description information about a search result, and at least one word segment carries a hyperlink label, so that a new search may be initiated based on the search result, thus facilitating a user to initiate a search. Moreover, because a combined word segment is used as a title, an infinite number of word segments may be presented theoretically. Therefore, the number of new search terms may be increased, to better meet the user's needs.

It should be noted that in the descriptions of the present disclosure, the terms "first", "second" and the like are merely for the purpose of description, but should not be understood as indicating or implying relative importance. In addition, in the descriptions of the present disclosure, "a plurality of' means two or more unless otherwise indicated.

Any process or method described in the flowcharts or in other manners here may be understood as indicating a module, segment or portion of code including one or more executable instructions for implementing specific logic functions or process steps. The scope of preferred example embodiments of the present disclosure includes additional implementations. It should be understood by those skilled in the art that the functions may occur in a sequence different from the sequences illustrated or discussed herein. For example, the functions may be executed, depending on the involved functionalities, substantially in parallel, or in a reverse sequence.

It should be understood that each of the parts of the present disclosure may be implemented by hardware, software, firmware or a combination thereof. In the above implementations, multiple steps or methods may be implemented by software or firmware that is stored in a memory and executed by an appropriate instruction executing system. For example, if it is implemented by hardware, it may be implemented by any of or a combination of the following technologies well known in the art as in another example embodiment: a discrete logic circuit having a logic gate circuit for implementing a logic function for a data signal, an application-specific integrated circuit having an appropriate combined logic gate circuit, a programmable gate array (PGA), a field programmable gate array (FPGA), and the like.

Those of ordinary skill in the art may understand that implementation of all or some of steps in the method of the above example embodiment may be completed by a program instructing relevant hardware. The program may be stored in a computer readable storage medium. When the program is run, one of or a combination of the steps of the method example embodiment is performed.

In addition, functional units in the example embodiments of the present disclosure may be integrated in one processing unit, or each of the units may exist alone physically, or two or more units may be integrated in one unit. The integrated unit may be implemented in the form of hardware or in the form of a software functional unit. When the integrated unit is implemented in the form of a software functional unit and sold or used as an independent product, the integrated unit may be stored in a computer readable storage medium.

The storage medium mentioned above may be a read-only memory (ROM), a magnetic disk, an optical disc, or the like.

Reference to phrases such as "an example embodiment", "some example embodiments", "an example", "a specific example", and "some examples" in the specification mean that specific features, structures, materials or characteristics described in combination with the example embodiment(s) or example(s) are included in at least one example embodiment or example of the present disclosure. In the specification, the schematic expressions of the phrases do not necessarily refer to the same example embodiment or example. Moreover, the specific features, structures, materials or characteristics described may be combined in any suitable manner in one or more example embodiments or examples.

Although the example embodiments of the present disclosure have been illustrated and described, it should be understood that the above example embodiments are exemplary and should not be construed as limitations to the present disclosure. Those of ordinary skill in the art may make changes, modifications, replacements and variations to the above example embodiments without departing from the scope of the present disclosure.

## Claims

1. An information search method comprising:
receiving a search term input by a user;
acquiring a search result based on the search term;
acquiring description information corresponding to the search result;
extracting one or more word segments from the description information;
combining the one or more word segments to generate a title of the search result, wherein at least one word segment carries a hyperlink label; and
returning the title after the combination of the word segments carrying the hyperlink labels to a user terminal for display.

2. The method of claim 1, further comprising:
receiving information about the user's selection of a word segment carrying a respective hyperlink label, to determine the word segment selected by the user;
combining the search term with the word segment selected by the user to generate a new search term; and
searching for information based on the new search term, and returning a search result to the user terminal.

3. The method of claim 1, wherein, in a commodity search, the search result comprises information about a commodity corresponding to the search term, and the description information corresponding to the search result comprises one or more of the following:
a title of the commodity;
feature data of the commodity; and
feature data of a store to which the commodity belongs.

4. The method of claim 3, wherein the title of the commodity comprises an original title of the commodity, and the extracting one or more word segments from the description information comprises:
reducing a length of the original title of the commodity to convert the original title to a short title; and
dividing the short title into one or more word segments.

5. The method of claim 4, wherein the reducing the length of the original title of the commodity to convert the original title to the short title comprises:
acquiring a preset short title candidate set, wherein the short title candidate set comprises a plurality of short titles; and
extracting a short title belonging to the short title candidate set from the original title.

6. An information search apparatus comprising:
a receiving module configured to receive a search term input by a user;
a first acquisition module configured to acquire a search result based on the search term;
a second acquisition module configured to acquire description information corresponding to the search result;
an extraction module configured to extract one or more word segments from the description information;
a generation module configured to combine the one or more word segments to generate a title of the search result, wherein at least one word segment carries a hyperlink label; and
a sending module configured to return the title after the combination of the word segments carrying the hyperlink labels to a user terminal for display.

7. The apparatus of claim 6, further comprising:
a determination module configured to receive information about the user's selection of a word segment carrying a respective hyperlink label to determine the word segment selected by the user;
an update module configured to combine the search term with the word segment selected by the user to generate a new search term; and
a search module configured to search for information based on the new search term, and return a search result to the user terminal.

8. The apparatus of claim 6, wherein in a commodity search, the search result comprises information about a commodity corresponding to the search term, and the description information corresponding to the search result comprises one or more of the following:
a title of the commodity;
feature data of the commodity; and
feature data of a store to which the commodity belongs.

9. The apparatus of claim 8, wherein the title of the commodity comprises: an original title of the commodity, and the extraction module is configured to:
reduce a length of the original title of the commodity to convert the original title to a short title; and
divide the short title into one or more word segments.

10. The apparatus of claim 9, wherein the extraction module being configured to reduce the length of the original title of the commodity to convert the original title to a short title comprises:
acquiring a preset short title candidate set, wherein the short title candidate set comprises a plurality of short titles; and
extracting a short title belonging to the short title candidate set from the original title.
